(19) **Europäisches Patentamt / European Patent Office / Office européen des brevets**

(11) **EP 4 141 391 B1**

(12) **EUROPEAN PATENT SPECIFICATION**

(45) Date of publication and mention
of the grant of the patent:
**27.11.2024 Bulletin 2024/48**

(21) Application number: **22192481.4**

(22) Date of filing: **26.08.2022**

(51) International Patent Classification (IPC):
***G01G 11/04*** (2006.01)

(52) Cooperative Patent Classification (CPC):
**G01G 11/04; G01G 11/046**

(54) **WEIGHING APPARATUS**

WÄGEVORRICHTUNG

APPAREIL DE PESAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.08.2021 JP 2021140531**

(43) Date of publication of application:
**01.03.2023 Bulletin 2023/09**

(73) Proprietor: **ISHIDA CO., Ltd.
Kyoto-shi, Kyoto 606-8392 (JP)**

(72) Inventors:
• **TARUMOTO, Yoshinori
Shiga, 520-3026 (JP)**
• **MAENO, Tomoya
Shiga, 520-3026 (JP)**
• **SUGIUCHI, Hajime
Shiga, 520-3026 (JP)**

(74) Representative: **Gill Jennings & Every LLP
The Broadgate Tower
20 Primrose Street
London EC2A 2ES (GB)**

(56) References cited:
**EP-A1- 3 286 531**

EP 4 141 391 B1

**Description**

**BACKGROUND**

**Technical Field**

The present invention relates to a weighing apparatus.

**Related Art**

Weighing apparatus are known which convey an article and measure the weight of the article as it is being conveyed. In such weighing apparatus, sometimes error arises between the actual weight of the article and the weight of the article that is measured due to the article being lifted up by an air flow or the like during conveyance.

To address this, patent document 1 (JP-ANo. 2013-76661) discloses collecting a preset number (a number of tests recommended by the manufacturer) of weighing results (dynamic weighing values) obtained by weighing, while conveying, a sample article whose weight is already known and then calculating a correction value using the collected weighing results. Obtaining a weight value of an article by using the calculated correction value to correct the dynamic measurement value when actually weighing the article is also disclosed.

EP 3286531 A1 discloses a weighing method for weighing containers having various forms, for example vials, bottles, capsules, containing various substances in the inside thereof, for example liquids, which are more or less viscous, powders, granules, tablets or similar, in particular in the pharmaceutical, medical or food sector, where there is a great need for weighing precision, accuracy and repeatability.

**SUMMARY**

**Technical Problem**

In this connection, the extent to which the weighing results (dynamic weighing values) vary in a weighing apparatus also differs depending on, for example, the environment where the weighing apparatus is installed. For that reason, how many sample article weighing results are necessary to obtain an appropriate correction value differs depending on the weighing apparatus. In other words, the proper value for the number of tests in patent document 1 (JP-A No. 2013-76661) differs depending on the weighing apparatus.

If, in calculating the correction value, the set number of tests is fewer compared to the proper value, there is a potential that the calculated correction value is not an appropriate value. If the number of tests is set to a sufficiently large number, the potential that the calculated correction value is not an appropriate value can be reduced. However, in this case, there is a potential that an excessive number of tests are performed, which runs the risk of unnecessarily increasing the operating time needed to calculate the correction value.

It is an object of the present invention to provide a weighing apparatus that weighs an article while conveying the article, the weighing apparatus being able to calculate a proper correction value for correcting the weight measured by a measurement unit and the actual weight of the article while reducing the operating time of the weighing apparatus needed for calculating the correction value.

**Solution to Problem**

A weighing apparatus of a first aspect includes a conveyance unit, a detection unit, and a control unit. The conveyance unit receive and convey an article. The detection unit detect a weight of the conveyance unit or, in a case where the conveyance unit is conveying the article, a weight of the conveyance unit and a weight of the article on the conveyance unit and output a weigh signal. The control unit calculates a correction value for correcting the weight of the article detected by the detection unit, based on the weigh signals output by the detection unit when a reference sample is conveyed by the conveyance unit for a predetermined number of times. The control unit calculates the predetermined number of times based on the weigh signals output by the detection unit when the control unit drives the conveyance unit.

In the weighing apparatus of the first aspect, the number of times the reference sample should be run when calculating the correction value is calculated based on the weigh signals output by the detection unit when the conveyance unit has been driven, so the occurrence of a situation where the number of weighings of the reference sample is too few for calculating an appropriate correction value or conversely where the number of weighings of the reference sample is too many can be reduced. As a result, in the weighing apparatus of the first aspect, an appropriate correction value can be calculated while reducing the operating time of the weighing apparatus needed to calculate the correction value (the

2

amount of time needed to calculate the correction value).

A weighing apparatus of a second aspect is the weighing apparatus of the first aspect, wherein the control unit calculates the predetermined number of times based on the weigh signals output by the detection unit when the control unit drives the conveyance unit and conveys the article.

In the weighing apparatus of the second aspect, the predetermined number of times is calculated based on the weigh signals output by the detection unit when the article is being conveyed, so an appropriate predetermined number of times for calculating the correction value can be calculated based on the effects of article conveyance in addition to the characteristics of the weighing apparatus itself and the effects of the installation environment.

A weighing apparatus of a third aspect is the weighing apparatus of the second aspect, wherein the control unit calculates the predetermined number of times based on the weigh signals output by the detection unit when the control unit drives the conveyance unit and conveys the reference sample.

In the weighing apparatus of the third aspect, the predetermined number of times is calculated based on the weigh signals output by the detection unit when the reference sample used to calculate the correction value is being conveyed, so an appropriate predetermined number of times for calculating the correction value can be calculated based also on the characteristics of the reference sample that the weighing apparatus actually weighs.

A weighing apparatus of a fourth aspect is the weighing apparatus of the first aspect, wherein the control unit calculates the predetermined number of times based on the weigh signals output by the detection unit when the conveyance unit is driven without conveying the article.

In the weighing apparatus of the fourth aspect, an appropriate predetermined number of times for calculating the correction value can be calculated in a short amount of time without conveying the article by the conveyance unit.

A weighing apparatus of a fifth aspect is the weighing apparatus of any of the first aspect to the fourth aspect, further includes an output unit that outputs the predetermined number of times calculated by the control unit.

In the weighing apparatus of the fifth aspect, the calculated predetermined number of times is output, so an operator or the like operating the weighing apparatus can check whether the number of times that has been calculated is an appropriate value.

A weighing apparatus of a sixth aspect is the weighing apparatus of any of the first aspect to the fifth aspect, further includes a storage unit that stores the predetermined number of times. The control unit stores the calculated predetermined number of times in the storage unit. The control unit calculates the correction value for correcting the weight of the article detected by the detection unit, based on the weigh signals output by the detection unit when the reference sample is conveyed by the conveyance unit the predetermined number of times stored in the storage unit.

In the weighing apparatus of the sixth aspect, the predetermined number of times that has been calculated is automatically set by the weighing apparatus, so the workforce of the operator for manually setting the predetermined number of times can be reduced.

## Advantageous Effects of Invention

The weighing apparatus of the present invention calculates the number of times the reference sample should be run when calculating the correction value based on the weigh signals output by the detection unit when the conveyance unit has been driven, so the occurrence of a situation where the number of weighings of the reference sample is too few for calculating an appropriate correction value or conversely the number of times of reference sample weighings is too many can be reduced.

## BRIEF DESCRIPTION OF THE DRAWINGS

FIG. 1 is a schematic front view, seen from the front, of a weighing apparatus pertaining to an embodiment of the weighing apparatus of the invention;
FIG. 2 is a block diagram of the weighing apparatus of FIG. 1;
FIG. 3 is a schematic plan view, seen from above, of main parts of the weighing apparatus of FIG. 1;
FIG. 4 is a schematic configuration diagram of a second conveyor of a conveyance device and a detection device of the weighing apparatus of FIG. 1;
FIG. 5 is a block diagram of a configuration for a weight calculation process performed by a control device of the weighing apparatus of FIG. 1;
FIG. 6 is a diagram schematically showing a detection signal of a load cell of the weighing apparatus of FIG. 1 and the detection signal after being filtered;
FIG. 7 is an example of a flowchart of a correction value calculation process in the weighing apparatus of FIG. 1;
FIG. 8 is a flowchart of a first example of a process for calculating a number of times of reference sample weighings in the correction value calculation process; and

FIG. 9 is a flowchart of a second example of a process for calculating a number of times of reference sample weighings in the correction value calculation process.

**DETAILED DESCRIPTION**

An embodiment of the weighing apparatus of the invention will be described with reference to the drawings.

(1) Overall Configuration

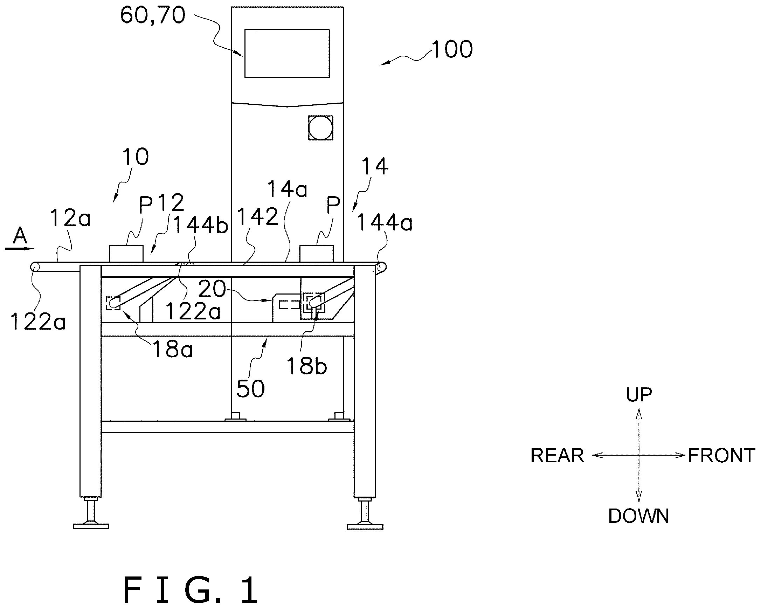

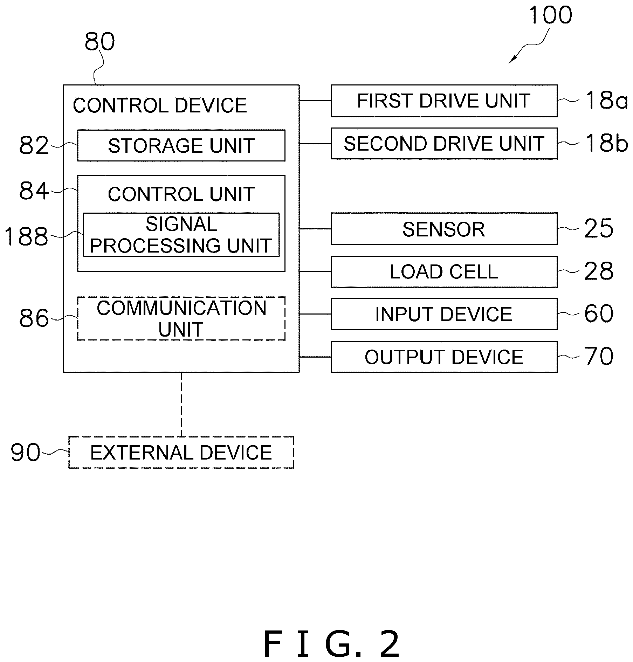

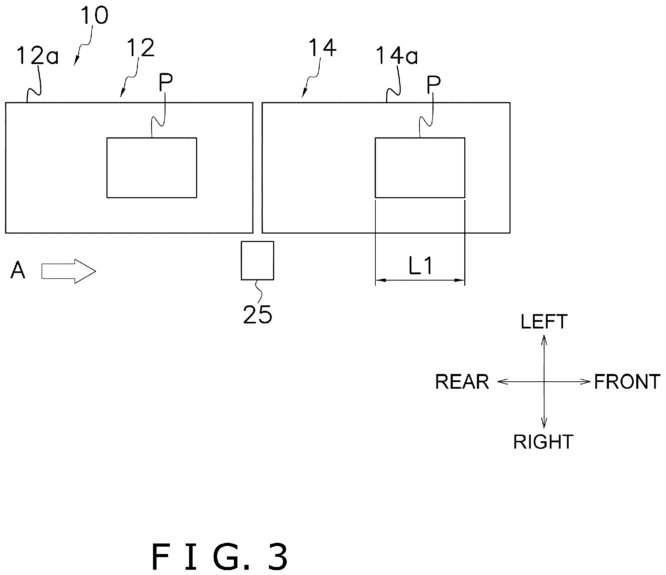

A weighing apparatus 100 pertaining to the embodiment of the weighing apparatus of the invention will be described with reference to FIG. 1 to FIG. 3. FIG. 1 is a schematic front view of the weighing apparatus 100 seen from the front. FIG. 2 is a block diagram of the weighing apparatus 100. FIG. 3 is a schematic plan view of main parts of the weighing apparatus 100 seen from above.

The weighing apparatus 100 is a weighing apparatus that weighs a weighing object P while conveying the weighing object P.

As shown in FIG. 1, the weighing apparatus 100 mainly has a conveyance device 10 and a detection device 20. As shown in FIG. 2, the weighing apparatus 100 also has a control device 80 that controls the operations of the conveyance device 10 and the detection device 20.

The conveyance device 10 receives and conveys the weighing object P, which is supplied from an upstream process not shown in the drawings (e.g., a process to manufacture the weighing object P). Specifically, the conveyance device 10 conveys the weighing object P to a place where its weight is detected by the detection device 20.

The detection device 20 detects the weight of the weighing object P conveyed by the conveyance device 10 and outputs a weigh signal corresponding to the weight the detection device 20 has detected to the control device 80. The control device 80 calculates a weight W of the weighing object P based on the weigh signal that is output when the detection device 20 detects the weight of the weighing object P. Moreover, the control device 80 judges whether or not the calculated weight W of the weighing object P is within an allowable weight range. The phrase "the weight W of the weighing object P being within an allowable weight range" means that the weight of the weighing object P is equal to or greater than an allowable minimum weight and equal to or less than an allowable maximum weight.

For example, a sorting device not shown in the drawings is disposed downstream of the weighing apparatus 100. The sorting device sorts the weighing object P based on the weight W of the weighing object P calculated by the control device 80. For example, in a case where the weight W of the weighing object P is outside the allowable weight range, the sorting device removes the weighing object P from the conveyance line of the weighing object P.

(2) Detailed Configuration

The weighing apparatus 100 will be described in detail below.

It will be noted that in the following description expressions such as "front", "rear", "upper", "lower", "right", and "left" may be used to describe directions and positional relationships, but these expressions are used for convenience of explanation.

Expressions such as "front", "rear", "upper", "lower", "right", and "left" follow the directions indicated by the arrows in the drawings unless otherwise specified.

(2-1) Conveyance Device

The conveyance device 10 conveys the weighing object P along a conveyance direction A (see FIG. 1 and FIG. 3).

The conveyance device 10 includes a first conveyor 12 and a second conveyor 14 as well as a first drive unit 18a and a second drive unit 18b. The first drive unit 18a and the second drive unit 18b are, for example, motors.

In the conveyance device 10, as shown in FIG. 1 and FIG. 3, the first conveyor 12 and the second conveyor 14 are arranged in this order from upstream in the conveyance direction A of the weighing object P.

As shown in FIG. 3, among the first conveyor 12 and the second conveyor 14, the first conveyor 12 is disposed upstream in the conveyance direction A. The first conveyor 12 functions as an intake conveyor that introduces to the weighing apparatus 100 the weighing object P conveyed from the process upstream of the weighing apparatus 100. The first conveyor 12 conveys the weighing object P in the conveyance direction A and passes the weighing object P to the second conveyor 14.

The first conveyor 12 includes a first conveyor belt 12a (see FIG. 1). The first conveyor belt 12a is entrained about a drive roller 122a and a follower roller 122b, and the first conveyor 12 conveys the weighing object P on the first conveyor belt 12a in the conveyance direction A as a result of the first drive unit 18a driving the drive roller 122a.

As shown in FIG. 3, among the first conveyor 12 and the second conveyor 14, the second conveyor 14 is disposed downstream in the conveyance direction A. The second conveyor 14 receives and conveys the weighing object P conveyed by the first conveyor 12. The detection device 20 detects the weight of the weighing object P which is conveyed by the second conveyor 14 and outputs the weigh signal. The second conveyor 14 conveys the weighing object P in the conveyance direction A and passes the weighing object P to a process downstream of the weighing apparatus 100 (e.g., the sorting device not shown in the drawings).

The second conveyor 14 includes a second conveyor belt 14a (see FIG. 1). The second conveyor belt 14a is entrained about rollers 144a and 144b, and the second conveyor 14 conveys the weighing object P on the second conveyor belt 14a in the conveyance direction A as a result of the second drive unit 18b driving the roller (drive roller) 144a.

(2-2) Detection Device

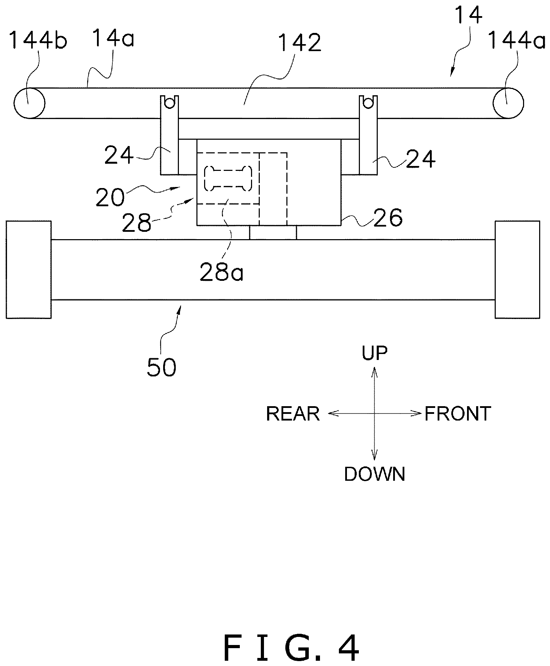

The detection device 20 will be described with further reference to FIG. 4. FIG. 4 is a schematic configuration diagram of the second conveyor 14 of the conveyance device 10 and the detection device 20.

As shown in FIG. 3 and FIG. 4, the detection device 20 mainly has a sensor 25 and a load cell 28 serving as an example of a detection unit.

The sensor 25 detects that the weighing object P conveyed by the first conveyor 12 has reached the second conveyor 14. The sensor 25 is, for example, a photoelectric sensor. However, the type of the sensor 25 is not limited to a photoelectric sensor and may be any type as long as it is a sensor that can detect the arrival of the weighing object P to the second conveyor 14.

The control device 80 detects the timing when the entire weighing object P is on the second conveyor belt 14a based on the detection result of the sensor 25, a conveyance speed V of the conveyance device 10, and a length L1 of the weighing object P in the conveyance direction A. The control device 80 calculates the weight W of the weighing object P based on a weigh signal output by the load cell 28 while the entire weighing object P is on the second conveyor belt 14a.

The load cell 28 includes a spring element 28a that becomes deformed in proportion to force acting thereon and a strain gauge (not shown in the drawings) that is adhered to the spring element 28a, converts strain into an electrical signal (this signal is called a weigh signal), and outputs the electrical signal. In short, the load cell 28 sends a weigh signal corresponding to the force acting thereon. The load cell 28 is housed inside a case 26 disposed under the second conveyor 14 (see FIG. 4).

Weight detection by the load cell 28 will be described. Before describing weight detection by the load cell 28, details about the structure of the second conveyor 14 of the conveyance device 10 will first be described.

The second conveyor 14 mainly has, in addition to the second conveyor belt 14a, a frame 142, a drive roller 144a and a follower roller 144b (see FIG. 4).

The frame 142 of the second conveyor 14 is supported by brackets 24 that extend upward from the case 26. The case 26, as shown in FIG. 4, is secured to a frame 50 of the weighing apparatus 100.

As shown in FIG. 4, the drive roller 144a and the follower roller 144b are provided on both ends of the frame 142. The drive roller 144a and the follower roller 144b are supported by the frame 142 so as to be freely rotatable. The second conveyor belt 14a is entrained about the drive roller 144a and the follower roller 144b. The second drive unit 18b drives the drive roller 144a, whereby the second conveyor belt 14a rotates and the second conveyor 14 conveys the weighing object P on the second conveyor belt 14a in the conveyance direction A.

Due to the above structure, when the weighing object P is not on the second conveyor belt 14a, the load cell 28 detects the weight of the second conveyor 14 serving as a conveyance unit (the force that the second conveyor 14 exerts on the load cell 28) and outputs a weigh signal. It will be noted that, here, the weight of the second conveyor 14 is generally the total weight of the frame 142, the drive roller 144a and the follower roller 144b, and the second conveyor belt 14a. Furthermore, when the second conveyor belt 14a is conveying the weighing object P, the load cell 28 detects the weight of the second conveyor 14 and the weight of the weighing object P on the second conveyor 14 and outputs a weigh signal.

(2-3) Control Device

The control device 80 controls the operations of each part of the weighing apparatus 100. Furthermore, the control device 80 performs a process to calculate the weight W of the weighing object P based on the weigh signal sent by the detection device 20.

The control device 80 of this embodiment mainly includes a CPU, a memory comprising a ROM, a RAM, and/or an auxiliary storage device (e.g., flash memory), and various electronic circuits. The control device 80 controls the operations of each part of the weighing apparatus 100 and performs various processes as a result of the CPU reading and executing programs stored in the memory.

It will be noted that the configuration of the control device 80 described here is merely an example configuration of the control device 80, and the same functions as those of the control device 80 of this embodiment may be realized by hardware such as a logic circuit or may be realized by a combination of hardware and software. Furthermore, the control device 80 may be realized by one device or may be realized by plural devices.

The control device 80 is electrically connected to the first drive unit 18a and the second drive unit 18b of the conveyance device 10 and the sensor 25 and the load cell 28 of the detection device 20.

The control device 80 is also electrically connected to an input device 60 and an output device 70 (see FIG. 2). The input device 60 receives various types of commands input by an operator of the weighing apparatus 100 and various types of information input by the operator. For example, the input device 60 is a touch panel display. The information input to the input device 60 includes, for example, a prescribed weight Wt of the weighing object P, the length L1 of the weighing object P, and the conveyance speed V at which the weighing object P is conveyed by the conveyance device 10. The commands and information input to the input device 60 are sent to the control device 80. The output device 70 is controlled by the control device 80 and outputs various types of information. For example, the output device 70 is a display that displays various types of information. In other words, in this embodiment, a touch panel display functions as the input device 60 and the output device 70.

It will be noted that the input device and the output device are not limited to the above device. For example, the input device may be a communication unit 86 that receives commands and information sent from an external device 90 (e.g., a mobile device operated by the operator or the like of the weighing apparatus 100, or a central control unit higher than the weighing apparatus 100). Furthermore, the output device may, for example, be a communication unit 86 that outputs (sends) various types of information to an external device 90 (e.g., a mobile device carried by the operator or the like of the weighing apparatus 100, or a central control unit higher than the weighing apparatus 100). In FIG. 2, the external device 90 and the communication unit 86 are indicated by dashed lines.

The memory of the control device 80 includes a storage unit 82 that stores various types of information. Examples of the information stored in the storage unit 82 will be described later.

The CPU of the control device 80 functions as a control unit 84 by reading and executing programs stored in the memory.

(2-4-1) Control Unit

The control unit 84 controls the operations of the weighing apparatus 100 based on the commands input to the input device 60 and the information input to the input device 60, such as the prescribed weight Wt of the weighing object P, the length L1 of the weighing object P in the conveyance direction A of the weighing object P conveyed in the conveyance direction A by the conveyance device 10, and the conveyance speed V at which the weighing object P is conveyed by the conveyance device 10.

For example, when an operation command is input to the input device 60, the control unit 84 controls the operations of the first drive unit 18a and the second drive unit 18b so that the speed at which the weighing object P is conveyed by the first conveyor 12 and the second conveyor 14 becomes the conveyance speed V

Furthermore, for example, the control unit 84 calculates the weight W of a given weighing object P based on the weigh signal output by the load cell 28 when that weighing object P is being conveyed by the second conveyor 14. Specifically, the control unit 84 detects the timing when the entire weighing object P is on the second conveyor belt 14a based on the detection result of the sensor 25, the conveyance speed V, and the length L1 of the weighing object P. The control unit 84 calculates the weight W of the weighing object P based on the weigh signal output by the load cell 28 while the entire weighing object P is on the second conveyor belt 14a. The calculation of the weight W of the weighing object P by the control unit 84 will be described later.

Furthermore, for example, the control unit 84 judges whether the calculated weight of the weighing object P is within the allowable weight range. For example, the control unit 84 judges whether the calculated weight W of the weighing object P is a value between the allowable minimum weight (prescribed weight Wt of article - $\alpha$) and the allowable maximum weight (prescribed weight Wt of article + $\beta$) ($\alpha$ and $\beta$ are set numerical values). The control unit 84 judges that the weighing object P is an accepted article if the calculated weight W of the weighing object P is within the allowable weight range and judges that the weighing object P is a rejected article if the calculated weight W of the weighing object P is outside the allowable weight range.

(A) Process for Calculating Weight of Article

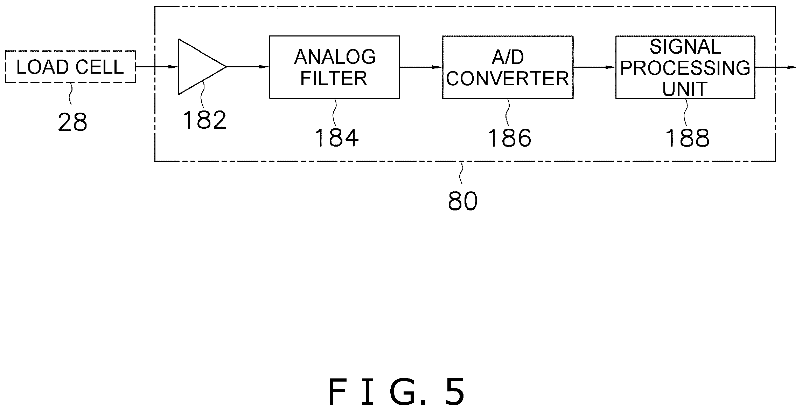

The process by which the control unit 84 calculates the weight W of the weighing object P will be described. First, a configuration of the control device 80 for the weight calculation process will be described with reference to FIG. 5. FIG. 5 is a block diagram of a configuration of the control device 80 for the weight calculation process.

The control device 80 includes an amp 182, an analog filter 184, and an A/D converter 186. Furthermore, the control unit 84 includes a signal processing unit 188 as a functional unit for the process for calculating the weight of the weighing object P.

The amp 182 amplifies the weigh signal input from the load cell 28 and outputs the amplified signal to the analog filter 184. The analog filter 184 removes unnecessary highfrequency components from the amplified signal and outputs an analog signal. The A/D converter 186 converts the analog signal output from the analog filter 184 to a digital signal and outputs the digital signal to the signal processing unit 188. The signal processing unit 188 filters the digital signal using a predetermined finite impulse response (FIR) filter (hereinafter simply called a filter), although this should not be construed as limiting the filter type. In short, the signal processing unit 188 uses the predetermined filter to filter the weigh signal that has been preprocessed by the amp 182, the analog filter 184, and the A/D converter 186 (hereinafter the weigh signal after being preprocessed will be called the weigh signal of the load cell 28). The control unit 84 calculates the weight W of the weighing object P based on the weigh signal of the load cell 28 filtered by the signal processing unit 188. Specifically, the control unit 84 calculates the dynamic weight of the weighing object P based on the weigh signal of the load cell 28 filtered by the signal processing unit 188. The control unit 84 calculates the weight W of the weighing object P by multiplying the dynamic weight by a correction value. The dynamic weight and the correction value will be described later.

It will be noted that, as mentioned above, in a case where the second conveyor belt 14a is conveying the weighing object P, the load cell 28 detects the weight of the second conveyor 14 and the weight of the weighing object P on the second conveyor 14 and outputs a weigh signal. For that reason, in a case where the second conveyor belt 14a is conveying the weighing object P, if the control unit 84 calculates the weight as is based on the weigh signal from the load cell 28, the control unit 84 calculates the total weight of the second conveyor 14 and the weighing object P. Therefore, the control unit 84, before it actually starts measuring the weight of the weighing object P, implements a process to derive a zero point based on the weigh signal output by the load cell 28 in a state in which the weighing object P is not on the second conveyor belt 14a. In other words, the control unit 84, before it actually starts measuring the weight of the weighing object P, implements in advance a process to derive the weight of the second conveyor 14 that should be subtracted from the total weight of the second conveyor 14 and the weighing object P on the second conveyor 14.

It will be noted that the reason the signal processing unit 188 filters the weigh signal of the load cell 28 is the weigh signal of the load cell 28 includes noise caused by the natural vibration of the weighing apparatus 100 and rotational vibration of the motors (e.g., the motor used as the second drive unit 18b) and the rollers (e.g., the drive roller 144a and the follower roller 144b of the second conveyor 14) used in the weighing apparatus 100.

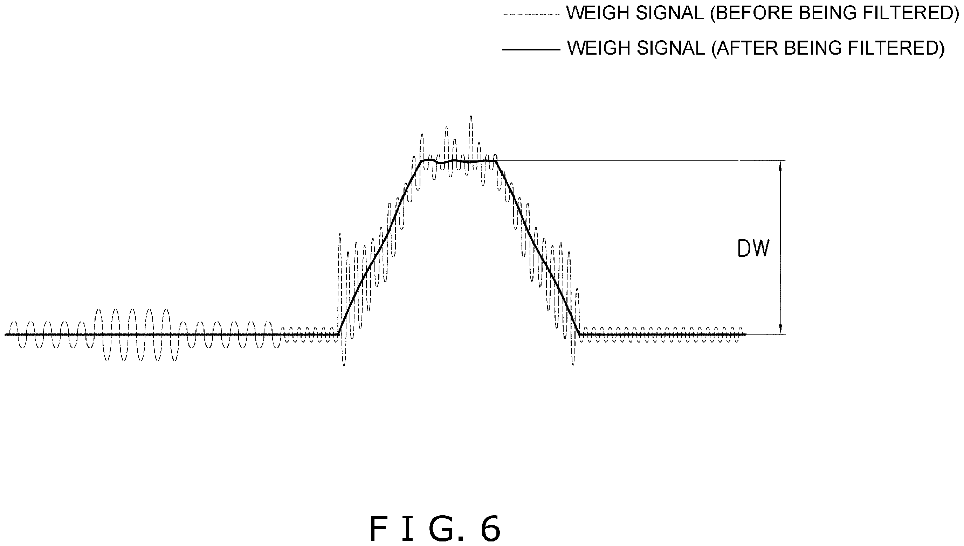

Referring to FIG. 6, the weigh signal of the load cell 28 is a signal that includes a vibration component with a relatively large amplitude (noise) as indicated by the dashed line in FIG. 6. The weight of the weighing object P cannot be accurately calculated from the weigh signal that includes this vibration component. Therefore, the signal processing unit 188 uses the predetermined filter to filter (reduce the noise in) the weigh signal of the load cell 28 to extract a signal with little noise (generally, a signal showing just the force the weighing object P exerts on the load cell 28) such as indicated by the solid line in FIG. 6.

The control unit 84 calculates the dynamic weight of the weighing object P based on the value of the difference between the weigh signal after being filtered (in which noise has been reduced) by the signal processing unit 188 and the zero point. Specifically, the control unit 84 calculates the dynamic weight of the weighing object P based on the value of the difference (the value indicated by DW in FIG. 6) between the weigh signal in the period in which the entire weighing object P is on the second conveyor belt 14a (the weigh signal in the plateau portion of the solid line in FIG. 6) and the weigh signal in the period in which the weighing object P is not on the second conveyor belt 14a.

(B) Dynamic Weight and Correction Value

When measuring the weight of an article as it is being conveyed, sometimes the article being conveyed experiences phenomena such as the article being lifted up by air resistance. For that reason, there is a potential that the dynamic weight of the weighing object P that the control unit 84 calculates based on the weigh signal of the load cell 28 filtered by the signal processing unit 188 differs from the actual weight of the article. Therefore, the control unit 84 calculates the weight W of the weighing object P by multiplying the dynamic weight by the correction value so that the dynamic weight is converted to the actual weight of the article.

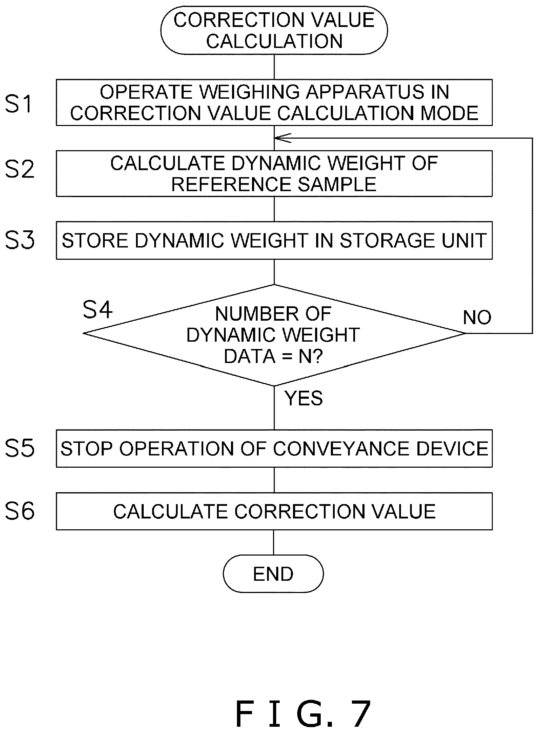

An example of a method of calculating the correction value will be described with reference to the example of the flowchart of a correction value calculation process of FIG. 7. It will be noted that the calculation method described here is merely an example and should not be construed as limiting the calculation method. For example, the order of processes in the flowchart may be appropriately changed where not contradictory.

As a premise for calculating the correction value, it will be assumed that a reference sample S, whose accurate weight is known, exists when calculating the correction value. The reference sample S is not limited, but preferably it is the same type of article as the weighing object P that the weighing apparatus 100 will actually weigh.

It will be noted that the accurate weight of the reference sample S is, for example, a weight (static weight) SW calculated based on the weigh signal output by the load cell 28 when the reference sample S has been placed on the second conveyor belt 14a in a state in which the conveyance device 10 is stopped. It will be noted that in a state in which the conveyance device 10 is stopped, since the detection of the weight of the reference sample S is not affected by air resistance, the correction value is unnecessary to calculate the weight SW of the reference sample S. It will be noted that the weight SW of the reference sample S may also be measured in a weighing apparatus different from the weighing apparatus 100.

Assuming the reference sample S exists, the operator attempting to calculate the correction value, for example, operates the input device 60 to cause the weighing apparatus 100 to operate in a correction value calculation mode (step S 1).

It will be noted that when causing the weighing apparatus 100 to operate in the correction value calculation mode, the operator also inputs the value of the weight SW of the reference sample S as information to the input device 60. The weight SW of the reference sample S input to the input device 60 is stored in the storage unit 82. It will be noted that in a case where the weight of the reference sample S is measured by the weighing apparatus 100, rather than the weight SW of the reference sample S being input to the input device 60 by the operator, the weight calculated by the control unit 84 may be stored as is as the weight SW in the storage unit 82.

In the correction value calculation mode, the control device 80 causes the conveyance device 10 and the detection device 20 to operate. Preferably, in the correction value calculation mode, the control device 80 controls the operation of the conveyance device 10 so that the reference sample S is conveyed at the conveyance speed (the conveyance speed V) used when the weighing apparatus 100 actually weighs the weighing object P (the article that is actually weighed). In this state, the reference sample S is placed on the first conveyor 12 of the conveyance device 10, the first conveyor 12 thereby conveys the reference sample S to the second conveyor 14, and the control unit 84 calculates the dynamic weight based on the weigh signal output by the load cell 28 of the detection device 20 when the reference sample S is being conveyed by the second conveyor 14 (step S2). The control unit 84 stores the dynamic weight it has calculated in the storage unit 82 (step S3). It will be noted that the control device 80 continues to operate the conveyance device 10 and the detection device 20 until the data count of dynamic weights stored in the storage unit 82 reaches a predetermined number (a later-described number of times of reference sample weighings N) (step S4). In other words, the operator attempting to calculate the correction value places the reference sample S on the first conveyor 12 of the conveyance device 10 a number of times equal to the number of times of reference sample weighings N to thereby have the control unit 84 calculate the dynamic weight of the reference sample S a number of times equal to the number of times of reference sample weighings N.

When a number of dynamic weights $DW_1$, $DW_2$, ... , $DW_N$ accumulate in the storage unit 82 reaches to the number of times of reference sample weighings N, the control unit 84 stops the operation of the conveyance device 10 (step S5).

Then, the control unit 84 uses the following formula 1 to calculate a correction value k (step S6).

[Formula 1]

$$k = \frac{SW \times N}{\sum_{i=1}^{N} DWi}$$

The control unit 84, when it actually calculates the weight W of the weighing object P, calculates the weight W by multiplying, by the correction value k, the dynamic weight of the weighing object P calculated based on the weigh signal of the load cell 28 filtered by the signal processing unit 188. In short, the control unit 84 calculates the correction value k for correcting the weight of the weighing object P detected by the load cell 28 based on the weigh signals output by the load cell 28 when the reference sample S is conveyed by the second conveyor 14 a number of times equal to the predetermined number of times of reference sample weighings N.

It will be noted that variations in the value of the dynamic weight calculated by the control unit 84 (in other words, the effect of noise remaining in the weigh signal after being filtered) differ depending on, for example, the characteristics of the weighing apparatus 100 itself and the environment of the site where the weighing apparatus 100 is installed. For example, in a case where there is a device that vibrates in the vicinity of the place where the weighing apparatus 100 is installed, and/or the place where the weighing apparatus 100 is installed is a place susceptible to the effects of air flows generated by an air conditioning system, variations in the value of the dynamic weight calculated by the control unit 84 tend to be large.

If the number of times of reference sample weighings N is set to a fixed value and the number of times of reference sample weighings N is set to a small number, there is a potential that the correction value k calculated for the weighing apparatus 100 installed in such an environment is not an appropriate value. Conversely, if the number of times of reference sample weighings N is set to a large number considering the potential for the weighing apparatus 100 is installed in such an environment, the possibility that the calculated correction value k is not an appropriate value can be reduced. However, in this case, there is a potential that an excessive number of tests are performed and the operating time needed to calculate the correction value increase unnecessarily.

Therefore, the control unit 84 uses a method such as those exemplified below to calculate the number of times of reference sample weighings N suitable for each weighing apparatus 100 based on the weigh signals output by the load cell 28 when the conveyance device 10 (particularly the second conveyor 14) is driven.

(C) Process for Calculating Number of times of reference sample weighings

<First Example>

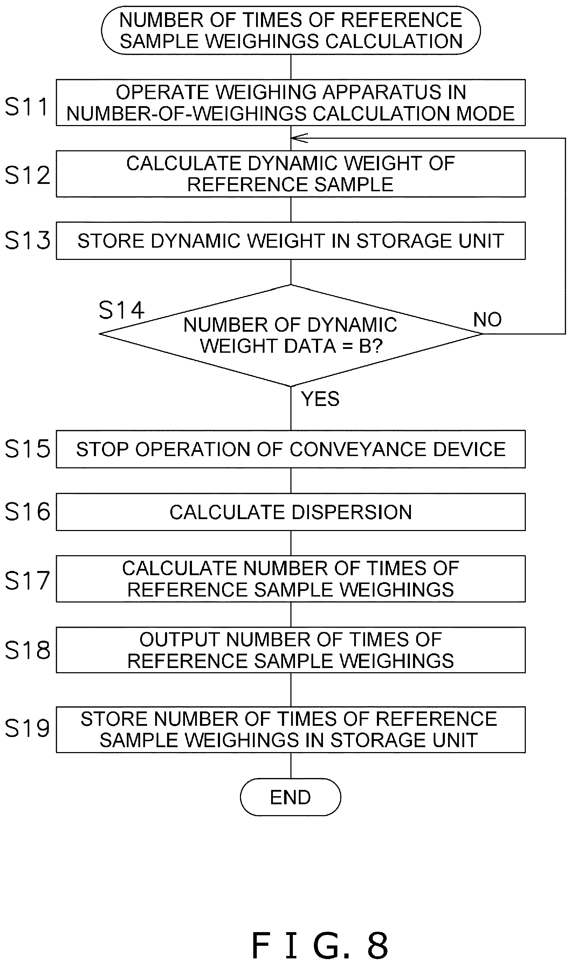

A first example of a process for calculating the number of times of reference sample weighings N for the correction value calculation process will be described with reference to the flowchart of FIG. 8.

In the first example, the control unit 84 calculates the number of times of reference sample weighings N based on the weigh signals output by the load cell 28 when the control unit 84 drives the conveyance device 10 to convey an article. It will be noted that the article the conveyance device 10 conveys when calculating the number of times of reference sample weighings N may be arbitrarily selected, but preferably it is the reference sample S. Here, description will be given assuming that the article the conveyance device 10 conveys when calculating the number of times of reference sample weighings N is the reference sample S whose weight is already known.

The operator attempting to calculate the number of times of reference sample weighings N, for example, operates the input device 60 to cause the weighing apparatus 100 to operate in a number-of-weighings calculation mode (step S11).

It will be noted that when causing the weighing apparatus 100 to operate in the number-of-weighings calculation mode, the operator also inputs as information the value of the weight SW of the reference sample S to the input device 60. The weight SW of the reference sample S input to the input device 60 is stored in the storage unit 82. It will be noted that in a case where the weight of the reference sample S is measured by the weighing apparatus 100, rather than the weight SW of the reference sample S being input to the input device 60 by the operator, the weight calculated by the control unit 84 may be automatically stored as the weight SW in the storage unit 82.

In the number-of-weighings calculation mode, the control device 80 causes the conveyance device 10 and the detection device 20 to operate in the same way as in the correction value calculation mode. Preferably, in the number-of-weighings calculation mode, the control device 80 controls the operation of the conveyance device 10 so that the reference sample S is conveyed at the conveyance speed (the conveyance speed V) used when the weighing apparatus 100 actually weighs the weighing object P (the article that is actually weighed). In this state, the reference sample S is placed on the first conveyor 12 of the conveyance device 10, the first conveyor 12 thereby conveys the reference sample S to the second conveyor 14, and the control unit 84 calculates the dynamic weight based on the weigh signal output by the load cell 28 of the detection device 20 when the reference sample S is being conveyed by the second conveyor 14 (step S12). The control unit 84 stores the calculated dynamic weight in the storage unit 82 (step S13). The control device 80 continues to operate the conveyance device 10 and the detection device 20 until the data count of dynamic weights stored in the storage unit 82 reaches a predetermined number B (e.g., five) (step S14). In other words, the operator attempting to calculate the number of times of reference sample weighings places the reference sample S on the first conveyor 12 of the conveyance device 10 a number of times equal to B to thereby have the control unit 84 calculate the dynamic weight of the reference sample S a number of times equal to B. It will be noted that for the value of B, a number with which the dispersion of the dynamic weights can be calculated in step S16 and which is as small a value as possible is selected.

When a number of dynamic weights $DW_1$, $DW_2$, ... , $DW_B$ accumulate in the storage unit 82 reaches to B, the control unit 84 stops the operation of the conveyance device 10 (step S15).

The control unit 84 uses the following formula to calculate dispersion $\sigma_{bg}^2$ caused by noise (step S16).

[Formula 2]

$$\sigma_{bg}^2 = \frac{1}{B} \sum_{i=1}^{B} (DWi - SW)^2$$

It will be noted that the sample mean x when the number of times of reference sample weighings is M follows the normal distribution given by formula 3 and formula 4 if the dispersion $\sigma_{bg}^2$ caused by noise is already known.

[Formula 3]

$$E[\bar{x}] = \mu$$

[Formula 4]

$$V[\bar{x}] = \frac{\sigma_{bg}^2}{M}$$

Consequently, in a case where, for example, $\mu$ is to be kept within a scale interval of $\pm e$ in a 95% confidence interval, performing interval estimation using the standard normal distribution yields formula 5.

[Formula 5]

$$\bar{x} - 1.96 \times \frac{\sigma_{bg}}{\sqrt{M}} \leq \mu \leq \bar{x} + 1.96 \times \frac{\sigma_{bg}}{\sqrt{M}}$$

Thus, by determining M so as to satisfy formula 6, the correction value k can be accurately calculated.

[Formula 6]

$$1.96 \times \frac{\sigma_{bg}}{\sqrt{M}} \leq e \;\; \rightarrow \;\; M \geq \left(\frac{1.96 \times \sigma_{bg}}{e}\right)^2$$

Therefore, the control unit 84 determines the smallest whole number greater than the value of M calculated using formula 6 to be the number of times of reference sample weighings N (step S 17).

It will be noted that the control unit 84 may also output to the output device 70 the number of times of reference sample weighings N calculated by the control unit 84 (step S18). Specifically, for example, the control unit 84 displays the number of times of reference sample weighings N on a display serving as an example of the output device 70.

Moreover, although it is not shown in the flowchart of FIG. 8, for example, the control unit 84 may have a display serving as an example of the output device 70 display an indication prompting an input to the input device 60 as to whether or not the number of times of reference sample weighings N is to be employed. Then, in a case where there is an input to the input device 60 indicating that the number of times of reference sample weighings N is to be employed, the process may proceed to step S19, and in a case where there is an input to the input device 60 indicating that the number of times of reference sample weighings N is not to be employed, the control unit 84 may reimplement the series of processes starting from the step S11. By configuring the control unit 84 in this way, if, for example, the number of times of reference sample weighings N is for some reason a numerical value that is clearly abnormal, the occurrence of a situation where that value is utilized as the number of times of reference sample weighings N can be inhibited.

It will be noted that the process of step S18, the step of prompting, on the output device 70, the operator to input whether or not to employ the number of times of reference sample weighings N to the input device 60, and the step of inputting to the input device 60 an indication that the number of times of reference sample weighings N is to be employed may be omitted.

Next, the control unit 84 stores the calculated number of times of reference sample weighings N in the storage unit 82 (step S19). The control unit 84, when calculating the correction value k based on the flowchart shown in FIG. 7, calculates the correction value k for correcting the dynamic weight of the weighing object P detected by the load cell 28 based on the weigh signals output by the load cell 28 when the reference sample S is conveyed by the second conveyor 14 a number of times equal to the number of times of reference sample weighings N stored in the storage unit 82.

It will be noted that the dynamic weights $DW_1$, $DW_2$, ... , $DW_B$ of the reference sample S obtained when calculating the number of times of reference sample weighings N may also be used for the dynamic weight data of the reference sample S for calculating the correction value k. By using the dynamic weights $DW_1$, $DW_2$, ... , $DW_B$ of the reference sample S obtained when calculating the number of times of reference sample weighings N as the dynamic weight data of the reference sample S for calculating the correction value k, the amount of time needed to calculate the correction value k can be shortened.

<Second Example>

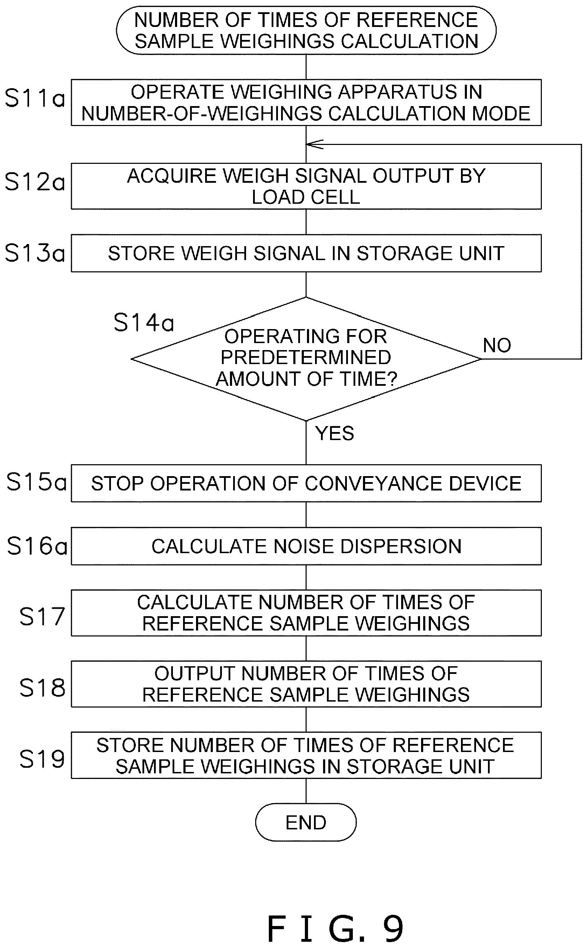

A second example of a process for calculating the number of times of reference sample weighings in the correction value calculation process will be described with reference to the flowchart of FIG. 9.

In the second example, the control unit 84 calculates the number of times of reference sample weighings N based on the weigh signals output by the load cell 28 when the conveyance device 10 is being driven and the second conveyor 14 is not conveying an article (is not conveying anything).

Here, an article such as the reference sample S is not necessary to calculate the number of times of reference sample weighings N.

The operator attempting to calculate the number of times of reference sample weighings N, for example, operates the input device 60 to cause the weighing apparatus 100 to operate in the number-of-weighings calculation mode (step S11a).

In the number-of-weighings calculation mode of the second example, the control device 80 causes the conveyance device 10 and the detection device 20 to operate in the same way as in the first example. Preferably, in the number-of-weighings calculation mode, the control device 80 controls the rotational speed of the motors of the first drive unit 18a and the second drive unit 18b to a rotational speed with which the conveyance speed V is realized when the weighing apparatus 100 actually weighs the weighing object P (the article that is actually weighed). In this state, the control unit 84 acquires the weighs signal output by the load cell 28 while the second conveyor 14 is operated (step S12a) and stores the weigh signals in the storage unit 82 (step S13a). The control device 80 continues to operate the conveyance device 10 and the detection device 20 and continues to acquire the weigh signals output by the load cell 28 and store the weigh signals in the storage unit 82 until a predetermined amount of time elapses (step S14a).

When the predetermined amount of time's worth of weigh signals are stored in the storage unit 82, the control unit 84 stops the operation of the conveyance device 10 (step S15a).

Then, the control unit 84 calculates the dispersion $\sigma_{bg}^{2}$ caused by noise in the weigh signals stored in the storage unit 82 (step S16a).

The processes of step S17 to step S19 are the same as the processes of step S17 to step S19 of the first example, so description thereof will be omitted here.

(3) Characteristics

(3-1) The weighing apparatus 100 pertaining to an example of the weighing apparatus includes the second conveyor 14 serving as an example of a conveyance unit, the load cell 28 serving as an example of a detection unit, and the control unit 84. The second conveyor 14 receives and conveys an article. The load cell 28 detects the weight of the second conveyor 14 or, in a case where the second conveyor 14 is conveying the article, the weight of the second conveyor 14 and the weight of the article on the second conveyor 14 and outputs a weigh signal. The control unit 84 calculates the correction value k for correcting the weight (dynamic weight) of the article detected by the load cell 28, based on the weigh signals output by the load cell 28 when the reference sample S is conveyed by the second conveyor 14 for a number of times equal to the number of times of reference sample weighings N. The control unit 84 calculates the number of times of reference sample weighings N based on the weigh signals output by the load cell 28 when the control unit 84 drives the second conveyor 14.

In the weighing apparatus 100, the number of times the reference sample S should be run when calculating the correction value k is calculated based on the weigh signals output by the load cell 28 when the second conveyor 14 has been driven, so the occurrence of a situation where the number of weighings of the reference sample S is too few for calculating an appropriate correction value k or conversely where the number of weighings of the reference sample S is too many can be reduced. As a result, in the weighing apparatus 100, an appropriate correction value k can be calculated while reducing the operating time of the weighing apparatus 100 needed to calculate the correction value k (the amount of time needed to calculate the correction value k).

(3-2) In the first example, the control unit 84 calculates the number of times of reference sample weighings N based on the weigh signals output by the load cell 28 when the control unit 84 drives the second conveyor 14 and conveys the article.

Here, the number of times of reference sample weighings N is calculated based on the weigh signals output by the load cell 28 when the article is being conveyed, so an appropriate number of times of reference sample weighings N for calculating the correction value k can be calculated based on the effects of article conveyance in addition to the characteristics of the weighing apparatus 100 itself and the effects of the installation environment.

Preferably, the control unit 84 calculates the number of times of reference sample weighings N based on the weigh signals output by the load cell 28 when the control unit 84 drives the second conveyor 14 and conveys the reference sample S.

In this weighing apparatus 100, the number of times of reference sample weighings N is calculated based on the weigh signals output by the load cell 28 when the reference sample S used to calculate the correction value k is being conveyed, so an appropriate number of times of reference sample weighings N for calculating the correction value k can be calculated based also on the characteristics of the reference sample S that the weighing apparatus 100 actually weighs.

(3-3) In the second example, the control unit 84 calculates the number of times of reference sample weighings N based on the weigh signals output by the load cell 28 when the second conveyor 14 is being driven without conveying the article.

Here, an appropriate number of times of reference sample weighings N for calculating the correction value k can be calculated in a short amount of time without the article conveying the article by the second conveyor 14.

(3-4) The weighing apparatus 100 preferably includes the output device 70 that outputs the number of times of reference sample weighings N calculated by the control unit 84.

In the weighing apparatus 100, the calculated number of times of reference sample weighings N is output, so an operator or the like operating the weighing apparatus 100 can check whether the number of times that has been calculated is an appropriate value (whether it is a value that is clearly too small or a value that is clearly too large technically).

(3-5) The weighing apparatus 100 includes the storage unit 82 that stores the number of times of reference sample weighings N. The control unit 84 stores the calculated number of times of reference sample weighings N in the storage unit 82. The control unit 84 calculates the correction value k for correcting the weight (dynamic weight) of the article detected by the load cell 28, based on the weigh signals output by the load cell 28 when the reference sample is conveyed by the second conveyor 14 the number of times of reference sample weighings N stored in the storage unit 82.

In the weighing apparatus 100, the number of times of reference sample weighings N that has been calculated is automatically set by the weighing apparatus 100, so the workforce of the operator for manually setting the number of times of reference sample weighings N can be reduced.

However, the weighing apparatus 100 should not be construed as being limited to this, and the operator may also manually input, via the input device 60, the number of times of reference sample weighings N that has been calculated (e.g., the number of times of reference sample weighings N output by the output device 70).

(4) Example Modifications

Example modifications of the embodiment will be described below. It will be noted that the example modifications described below may also be appropriately combined where they are not mutually contradictory.

(4-1) Example Modification A

The weighing apparatus 100 includes the conveyance device 10, the detection device 20, and the control device 80, but the weighing apparatus 100 may also be an apparatus having configurations other than these. For example, in the above embodiment, an example is described where a sorting device separate from the weighing apparatus 100 is disposed downstream of the weighing apparatus 100, but the weighing apparatus 100 may also have a sorting mechanism that sorts the weighing object P based on the weighing results of the weighing object P.

**Industrial Applicability**

The present invention can be widely applied to weighing apparatus that weigh an article while conveying the article, and is therefore useful.

**Reference Signs List**

14      Second Conveyor (Conveyance Unit)
28      Load Cell (Detection Unit)
70      Output Device (Output Unit)
82      Storage Unit

84      Control Unit
86      Communication Unit (Output Unit)
100     Weighing Apparatus
S       Reference Sample

**Citation List**

**Patent Literature**

Patent Document 1: JP-A No. 2013-76661

**Claims**

1.  A weighing apparatus (100) comprising:

    a conveyance unit (14) configured to receive and convey an article (P);
    a detection unit (28) configured to detect a weight of the conveyance unit or, in a case where the conveyance unit is conveying the article, a weight of the conveyance unit and a weight of the article on the conveyance unit and output a weigh signal; and
    a control unit (84) configured to calculate a correction value for correcting the weight of the article detected by the detection unit, based on the weigh signals output by the detection unit when a reference sample (S) is conveyed by the conveyance unit for a predetermined number of times,
    wherein the control unit is configured to calculate the predetermined number of times based on the weigh signals output by the detection unit when the control unit drives the conveyance unit.

2.  The weighing apparatus (100) of claim 1, wherein the control unit is configured to calculate the predetermined number of times based on the weigh signals output by the detection unit when the control unit drives the conveyance unit and conveys the article.

3.  The weighing apparatus (100) of claim 2, wherein the control unit is configured to calculate the predetermined number of times based on the weigh signals output by the detection unit when the control unit drives the conveyance unit and conveys the reference sample.

4.  The weighing apparatus (100) of claim 1, wherein the control unit is configured to calculate the predetermined number of times based on the weigh signals output by the detection unit when the conveyance unit is driven without conveying the article.

5.  The weighing apparatus (100) of any one of claims 1 to 4, further comprising an output unit (70) configured to output the predetermined number of times calculated by the control unit.

6.  The weighing apparatus (100) of any one of claims 1 to 5, further comprising a storage unit (82) configured to store the predetermined number of times, wherein

    the control unit is configured to store the calculated predetermined number of times in the storage unit, and
    the control unit is configured to calculate the correction value for correcting the weight of the article detected by the detection unit, based on the weigh signals output by the detection unit when the reference sample is conveyed by the conveyance unit the predetermined number of times stored in the storage unit.

**Patentansprüche**

1.  Wägevorrichtung (100), die aufweist:

    eine Fördereinheit (14), die konfiguriert ist, einen Artikel (P) aufzunehmen und zu befördern;
    eine Erfassungseinheit (28), die konfiguriert ist, ein Gewicht der Fördereinheit oder, in einem Fall, in dem die Fördereinheit den Artikel befördert, ein Gewicht der Fördereinheit und ein Gewicht des Artikels auf der Fördereinheit zu erfassen und ein Wägesignal auszugeben; und

eine Steuereinheit (84), die konfiguriert ist, einen Korrekturwert zum Korrigieren des Gewichts des von der Erfassungseinheit erfassten Artikels zu berechnen, basierend auf den von der Erfassungseinheit ausgegebenen Wägesignalen, wenn eine Referenzprobe (S) von der Fördereinheit für eine vorbestimmte Anzahl von Malen befördert wird,

wobei die Steuereinheit konfiguriert ist, die vorbestimmte Anzahl von Malen basierend auf den von der Erfassungseinheit ausgegebenen Wägesignalen zu berechnen, wenn die Steuereinheit die Fördereinheit betreibt.

2. Wägevorrichtung (100) nach Anspruch 1, wobei die Steuereinheit konfiguriert ist, die vorbestimmte Anzahl von Malen basierend auf den von der Erfassungseinheit ausgegebenen Wägesignalen zu berechnen, wenn die Steuereinheit die Fördereinheit betreibt und den Artikel befördert.

3. Wägevorrichtung (100) nach Anspruch 2, wobei die Steuereinheit konfiguriert ist, die vorbestimmte Anzahl von Malen basierend auf den von der Erfassungseinheit ausgegebenen Wägesignalen zu berechnen, wenn die Steuereinheit die Fördereinheit betreibt und die Referenzprobe befördert.

4. Wägevorrichtung (100) nach Anspruch 1, wobei die Steuereinheit konfiguriert ist, die vorbestimmte Anzahl von Malen basierend auf den Wägesignalen zu berechnen, die von der Erfassungseinheit ausgegeben werden, wenn die Fördereinheit betrieben wird, ohne den Artikel zu befördern.

5. Wägevorrichtung (100) nach einem der Ansprüche 1 bis 4, die ferner eine Ausgabeeinheit (70) aufweist, die konfiguriert ist, die von der Steuereinheit berechnete vorbestimmte Anzahl von Malen auszugeben.

6. Wägevorrichtung (100) nach einem der Ansprüche 1 bis 5, die ferner eine Speichereinheit (82) aufweist, die konfiguriert ist, die vorbestimmte Anzahl von Malen zu speichern, wobei

die Steuereinheit konfiguriert ist, die berechnete vorbestimmte Anzahl von Malen in der Speichereinheit zu speichern, und
die Steuereinheit konfiguriert ist, den Korrekturwert zum Korrigieren des Gewichts des von der Erfassungseinheit erfassten Artikels zu berechnen, basierend auf den Wägesignalen, die von der Erfassungseinheit ausgegeben werden, wenn die Referenzprobe von der Fördereinheit die vorbestimmte Anzahl von Malen befördert wird, die in der Speichereinheit gespeichert ist.

**Revendications**

1. Appareil de pesage (100) comprenant :

un appareil de transport (14) configuré pour recevoir et transporter un article (P) ;
un module de détection (28) configuré pour détecter un poids de l'appareil de transport, ou, dans un cas où l'appareil de transport est en train de transporter l'article, un poids de l'appareil de transport et un poids de l'article sur l'appareil de transport, et émettre un signal de pesée ; et
un module de commande (84) configuré pour calculer une valeur de rectification pour rectifier le poids de l'article détecté par le module de détection, en fonction des signaux de pesée émis par le module de détection lorsqu'un échantillon de référence (S) est transporté par l'appareil de transport un certain nombre de fois prédéterminé, le module de commande étant configuré pour calculer le nombre de fois prédéterminé d'après les signaux de pesée émis par le module de détection lorsque le module de commande entraîne l'appareil de transport.

2. Appareil de pesage (100) selon la revendication 1, le module de commande étant configuré pour calculer le nombre de fois prédéterminé d'après les signaux de pesée émis par le module de détection lorsque le module de commande entraîne l'appareil de transport et transporte l'article.

3. Appareil de pesage (100) selon la revendication 2, le module de commande étant configuré pour calculer le nombre de fois prédéterminé d'après les signaux de pesée émis par le module de détection lorsque le module de commande entraîne l'appareil de transport et transporte l'échantillon de référence.

4. Appareil de pesage (100) selon la revendication 1, le module de commande étant configuré pour calculer le nombre de fois prédéterminé d'après les signaux de pesée émis par le module de détection lorsque l'appareil de transport est entraîné sans transporter l'article.

5. Appareil de pesage (100) selon une quelconque des revendications 1 à 4, comprenant en outre un dispositif de sortie (70) configuré pour fournir le nombre de fois prédéterminé calculé par le module de commande.

6. Appareil de pesage (100) selon une quelconque des revendications 1 à 5, comprenant en outre une unité de mémoire (82) configurée pour enregistrer le nombre de fois prédéterminé,

le module de commande étant configuré pour enregistrer le nombre de fois prédéterminé dans l'unité de mémoire, et
le module de commande étant configuré pour calculer la valeur de rectification pour rectifier le poids de l'article détecté par le module de détection, d'après les signaux de pesée fournis par le module de détection lorsque l'échantillon de référence est transporté par l'appareil de transport le nombre de fois prédéterminé enregistré dans l'unité de mémoire.

F I G. 1

EP 4 141 391 B1

FIG. 2

F I G. 3

144b  14a                142                    14   144a

24                                                    24

20
28                                      26

28a

50

UP

REAR ←——→ FRONT

DOWN

# F I G. 4

```
┌ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┐
┌─────────┐    ┌─────────┐   ┌─────────┐   ┌──────────┐   ┌───────────┐
│LOAD CELL│───▷│         │──▷│ ANALOG  │──▷│   A/D    │──▷│  SIGNAL   │──▷
└─────────┘    │         │   │ FILTER  │   │CONVERTER │   │PROCESSING │
                                                           │   UNIT    │
   28            182          184             186             188
└ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┘
                              80
```

# F I G. 5

------- WEIGH SIGNAL (BEFORE BEING FILTERED)

——— WEIGH SIGNAL (AFTER BEING FILTERED)

DW

F I G. 6

CORRECTION VALUE
CALCULATION

S1 | OPERATE WEIGHING APPARATUS IN CORRECTION VALUE CALCULATION MODE

S2 | CALCULATE DYNAMIC WEIGHT OF REFERENCE SAMPLE

S3 | STORE DYNAMIC WEIGHT IN STORAGE UNIT

S4 | NUMBER OF DYNAMIC WEIGHT DATA = N? — NO

YES

S5 | STOP OPERATION OF CONVEYANCE DEVICE

S6 | CALCULATE CORRECTION VALUE

END

# F I G. 7

$$\text{NUMBER OF TIMES OF REFERENCE} \\ \text{SAMPLE WEIGHINGS CALCULATION}$$

S11 │ OPERATE WEIGHING APPARATUS IN NUMBER-OF-WEIGHINGS CALCULATION MODE

S12 │ CALCULATE DYNAMIC WEIGHT OF REFERENCE SAMPLE

S13 │ STORE DYNAMIC WEIGHT IN STORAGE UNIT

S14 │ NUMBER OF DYNAMIC WEIGHT DATA = B?   NO

YES

S15 │ STOP OPERATION OF CONVEYANCE DEVICE

S16 │ CALCULATE DISPERSION

S17 │ CALCULATE NUMBER OF TIMES OF REFERENCE SAMPLE WEIGHINGS

S18 │ OUTPUT NUMBER OF TIMES OF REFERENCE SAMPLE WEIGHINGS

S19 │ STORE NUMBER OF TIMES OF REFERENCE SAMPLE WEIGHINGS IN STORAGE UNIT

END

F I G . 8

NUMBER OF TIMES OF REFERENCE
SAMPLE WEIGHINGS CALCULATION

S11a | OPERATE WEIGHING APPARATUS IN NUMBER-OF-WEIGHINGS CALCULATION MODE

S12a | ACQUIRE WEIGH SIGNAL OUTPUT BY LOAD CELL

S13a | STORE WEIGH SIGNAL IN STORAGE UNIT

S14a | OPERATING FOR PREDETERMINED AMOUNT OF TIME? — NO

YES

S15a | STOP OPERATION OF CONVEYANCE DEVICE

S16a | CALCULATE NOISE DISPERSION

S17 | CALCULATE NUMBER OF TIMES OF REFERENCE SAMPLE WEIGHINGS

S18 | OUTPUT NUMBER OF TIMES OF REFERENCE SAMPLE WEIGHINGS

S19 | STORE NUMBER OF TIMES OF REFERENCE SAMPLE WEIGHINGS IN STORAGE UNIT

END

F I G. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013076661 A
- EP 3286531 A1